# EUROPEAN PATENT APPLICATION

(11) **EP 0 919 999 A2**
(43) Date of publication of application: **02.06.1999**
(21) Application number: 98101701.5
(22) Date of filing: 02.02.1998
(51) Int. Cl.: G11B 7/26, B65B 29/00, B29D 17/00

(54) **Recordable optical disk conveyor for recording, reading and printing said disks**

(30) Priority: 24.11.1997 IT MI972609
(71) Applicant: Bernardini S.r.l., 20099 Sesto San Giovanni (Milano) (IT)
(72) Inventor: Bernardini, Bernardino, 20137 Milano (IT)
(74) Representative: Modiano, Guido, Dr.-Ing.

(57) **Abstract**

A recordable optical disk conveyor for recording, reading and printing the disks; its particularity is the fact that it comprises at least one conveyor element (2) for supporting optical disks (3) to be recorded, which can move substantially in a single direction through at least one recording station (4), for entry from one side of the recording station (4) and exit from the opposite side of the recording station (4).

## Description

The present invention relates to a recordable optical disk conveyor for recording, reading and printing said disks. More particularly, the invention relates to a conveyor for recordable optical disks such as compact discs and the like.

It is known that optical disks can be recorded either by means of a press, which forms on their surface a series of microscopic grooves which correspond to the information to be read from the optical disk, or by means of a commercially available recording apparatus which receives in input the optical disk to be recorded, in a specifically provided tray, performs recording on the optical disk, and then expels the tray with the optical disk on the same side used for input.

In this second type of optical disk recording, robots are usually provided which load the various optical disks sequentially in the recording apparatus, unload them from the recording apparatus once they have been recorded, and load them into subsequent equipment, for example for controlling the quality of recording, of printing and the like.

The step for loading the optical disks into the recording apparatus therefore entails positioning the optical disk, by a movable arm of the robot, on a pull-out tray of the recording apparatus, and at the end of the recording operation entails unloading the recorded optical disk from the same tray, on the same side used for input.

This type of recording method and apparatus, though being satisfactory as to the obtainable recording quality, nonetheless entails drawbacks due to the sum of the idle times that are inevitably present in a cycle for recording a plurality of optical disks by means of recording devices provided with a pull-out tray for the insertion of the optical disks to be recorded.

These idle times are in fact due to the time required for loading and unloading the optical disks into and from the recording apparatus and to the fact that the presence of several recording stations arranged parallel to each other considerably increases said idle times, since the steps that follow the recording of the optical disks must all be performed synchronously and therefore each recording station must finish its work before it can expel the optical disk and before the optical disk can move onto a subsequent production step. It is therefore clear that the robot must load and unload sequentially a plurality of recording stations, necessarily entailing idle times which increase as the number of recording stations increases.

A partial solution to these drawbacks would be to have a plurality of robots for loading and unloading optical disks into and from the corresponding recording stations, but this would necessarily entail an increase in costs and space occupation.

The presence of robots with corresponding arms for loading and unloading optical disks into and from the trays of the recording apparatus in fact entails the need for considerable space next to the recording station.

Further this fact requires complicated maintenance of the equipment.

The aim of the present invention is therefore to provide a recordable optical disk conveyor for recording, reading and printing said disks, which allows an innovative system for loading the optical disks into the various workstations in order to reduce idle times during a working cycle.

Within the scope of this aim, an object of the present invention is to provide a recordable optical disk conveyor for recording, reading and printing said disks which allows to simplify the maintenance of the individual components of the device.

Another object of the present invention is to provide a recordable optical disk conveyor for recording, reading and printing said disks which is highly reliable, relatively easy to provide and at competitive costs.

This aim, these objects and others which will become apparent hereinafter are achieved by a recordable optical disk conveyor for recording, reading and printing said disks, characterized in that it comprises at least one conveyor element for supporting optical disks to be recorded, which can move substantially in a single direction through at least one recording station, for entry from one side of said recording station and exit from the opposite side of said recording station.

Further characteristics and advantages of the invention will become apparent hereinafter from the following detailed description of preferred but not exclusive embodiments of the device according to the invention, illustrated only by way of non-limitative example in the accompanying drawings, wherein:
figure 1 is a schematic plan view of the device for recording and printing recordable CDs, according to the present invention;
figure 2 is a lateral elevation view of the device according to the invention shown in figure 1;
figure 3 is a partial schematic plan view of a third embodiment of the conveyor element of the device of figure 1; and
figure 4 is a schematic partial view of a second embodiment of the conveyor element used in the device shown in figure 1.

With reference to the above figures, the conveyor with associated recording, reading and printing means for recordable optical disks, generally designated by 1, comprises at least one conveyor element, designated by 2, which is advantageously constituted for example by a motorized conveyor belt, which allows to accommodate thereon optical disks 3 which must be recorded by a recording apparatus 4.

The conveyor element is advantageously provided, as mentioned, in the form of a conveyor belt which is closed in a loop and rotates around rollers 5 and 6 for conveying the optical disks 3 through the different processing stations, as described more clearly hereinafter.

In particular, the conveyor belt can be formed by two conveyor belts 2 which are arranged parallel to each other, each belt supporting a sector of the optical disk 3.

The conveyor belt or belts 2 enter the recording station 4 from one side and exit from the opposite side, conveying the recorded optical disk 3, and then pass sequentially through subsequent processing stations, such as for example a recording quality control station 9, and then through a station 20 wherein the surface of the optical disk 3 is printed or screen-printed in order to give it a pleasant aesthetic appearance.

The recording station 4 according to the invention is therefore not provided with a pull-out tray for accommodating the optical disk to be recorded and does not require the presence of one or more robots to load the optical disk 3 into the tray of the recording station 4 and then unload it.

The optical disk 3 passes through the recording station 4 by means of the conveyor belt 2, which enters, as shown, from one side of the recording station, stops with the disk located at the recording position, then conveys the disk to the exit, on the opposite side with respect to the entry side, once recording has ended.

The path followed by the belt 2 is therefore a unidirectional translatory path and passage through the recording station 4 therefore occurs unidirectionally from the entry side to the exit side of the station, with optional slight adjustments of the position of the optical disk 3 on the belt 2 in order to arrange it exactly at the recording position inside the recording station 4.

An automatic loading station, not shown, is provided upstream of the recording station in order to load the optical disks 3 that must subsequently be recorded.

The conveyor belt 2 can advantageously be provided, as shown, by a single belt 2 having substantially elliptical openings 8 through which means for lifting the optical disk 3 to be recorded and/or read and recording and/or reading heads can pass, as will become apparent hereinafter.

This allows to have a reduced conveyance width for the optical disk 3 than that obtainable with a pair of parallel belts 2 and thus allows easier insertion of the optical disk 3 in the recording station 4.

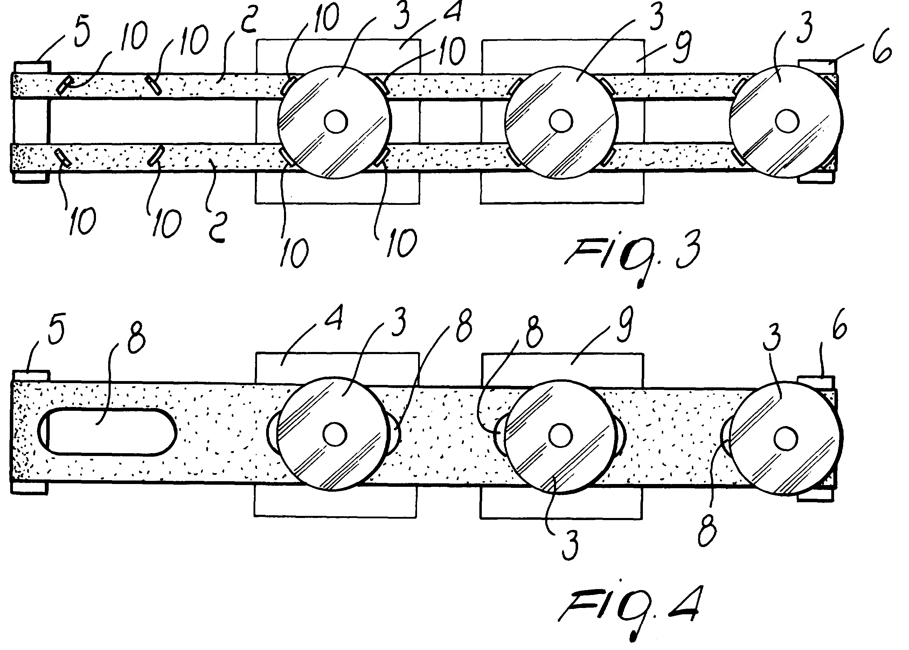

In this manner, the conveyor belt or belts 2 allow to eliminate the presence of robots and therefore to reduce the idle times related to the loading and unloading of the optical disk 3 into and from the tray of the recording station 4, implementing instead a continuous unidirectional conveyance system which does not entail changes in direction at the recording station 4. A further embodiment of the conveyor belts 2 is

illustrated in figure 3, wherein retention elements 10 are provided and arranged at each one of the two belts 2, in order to keep firmly between said elements the optical disk 3 that is loaded onto the conveyor belts 2.

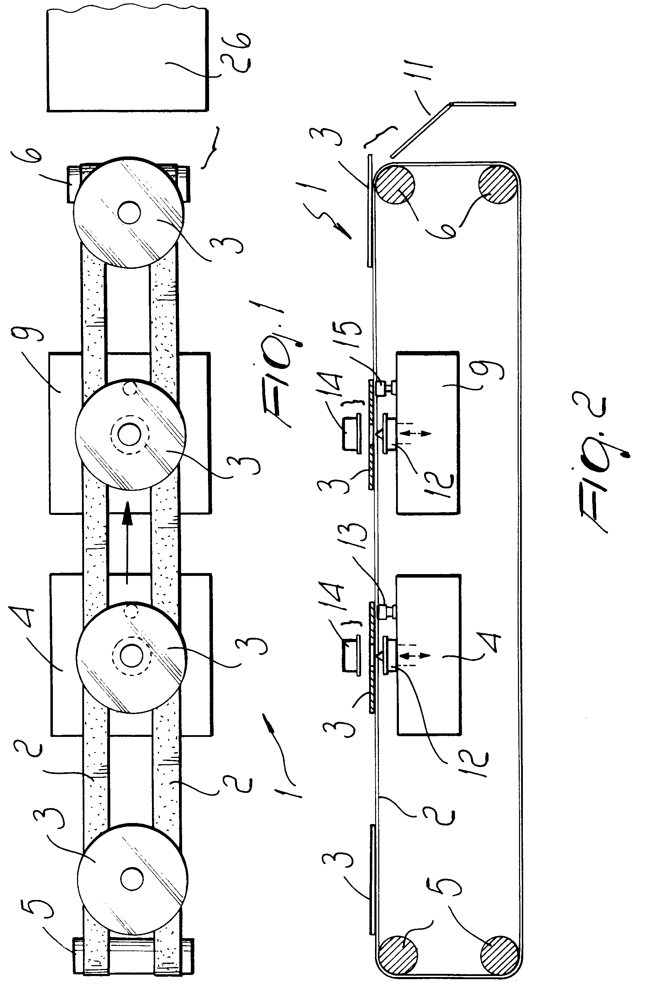

Figure 2 is a detail side view of the sequence of steps for the recording and quality control of an optical disk 3.

12 designates a motor for lifting/lowering, with respect to the conveyor element 2, the optical disk 3 to be recorded. During recording, the disk 3 is lifted off the belt 2 and a recording head 13 performs recording. A stop element 14 is provided above the conveyor element 2 for the optical disk 3.

As regards the quality control station 9, in a similar manner there are provided a motor 12, a stop element 14 and a head 15, which in this case is a reading head.

With reference to the above figures, the operation of the recording, playback and printing device according to the present invention is evident from what has already been explained.

Downstream of the quality control station 9 there is provided also a sorting unit 11 suitable to select the optical disks that have been recorded with good quality, and therefore must be sent to an optional subsequent printing station 6, from those recorded with poor quality, which must therefore be discarded.

The optical disks 3 considered to be of good quality are sent to a conveyor in order to feed them to the subsequent printing station 20, or to a printing station which is common to all the recording stations, while the optical disks 3 that are considered to be defective are sent on a conveyor for rejection.

It is of course possible to arrange several devices 1 side by side and parallel to each other, obtaining in a compact space a concentration of devices 1 which is higher than allowed by arranging side by side conventional devices with their corresponding robots.

At the recording station 4, the optical disk 3 is lifted off the conveyor belt or belts 2 by means of the motor 12 provided in the recording station (and in the reading station) for the optical disk 3.

In this manner, the lifting of the optical disk 3 for recording allows to center the optical disk 3 arranged within the subsequent quality control station 9, performing adjustments to the advancement direction of the conveyor belt or belts 2.

In practice it has been observed that the device according to the invention fully achieves the intended aim, since it allows to reduce the inherent idle times of conventional kinds of devices caused by the presence of robots.

The conveyor element in fact allows continuous unidirectional conveyance of the optical disks through the various stations, particularly through the recording station, which is the delaying factor of the production cycle for conventional apparatuses.

The device thus conceived is susceptible of numerous modifications and variations, all of which are within the scope of the inventive concept; all the details may also be replaced with other technically equivalent elements.

In practice, the materials employed, so long as they are compatible with the specific use, as well as the dimensions, may be any according to requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A recordable optical disk conveyor for recording, reading and printing said disks, characterized in that it comprises at least one conveyor element for supporting optical disks to be recorded, which can move substantially in a single direction through at least one recording station, for entry from one side of said recording station and exit from the opposite side of said recording station.

2. A conveyor according to claim 1, characterized in that said at least one conveyor element comprises a conveyor belt which runs in a closed path around at least one pair of rollers for supporting said optical disks.

3. A conveyor according to claim 2, characterized in that said conveyor element comprises two conveyor belts which are arranged side by side and parallel to each other for supporting a plurality of optical disks to be recorded.

4. A conveyor according to claim 1, characterized in that said recording station has a first opening for the entry of said conveyor element and a second opening, arranged opposite the first one, for the exit of said conveyor belt.

5. A conveyor according to claim 2, characterized in that said conveyor belt comprises a plurality of tabs which are rigidly coupled to said belt, are parallel one another and are arranged at right angles to said belt in order to support said optical disks to be recorded.

6. A conveyor according to claim 3, characterized in that said pair of conveyor belts comprises fixing elements which are arranged in pairs on each one of said conveyor belts, for the firm retention of said optical disks on the conveyor belts.

7. A conveyor according to claim 1, characterized in that it comprises at least one station for controlling the quality of the recorded optical disks which is arranged downstream of said recording station, said conveyor belt conveying said optical disks through said quality control station.

8. A conveyor according to claim 1, characterized in that it comprises a printing station for printing and/or screen-printing the upper surface of said optical disks.

9. A conveyor according to claim 7, characterized in that it also comprises a sorting device which is arranged after said station for controlling the quality of said recorded optical disks, in order to separate correctly recorded optical disks from optical disks recorded with poor quality.
